# EUROPEAN PATENT APPLICATION

(11) **EP 4 790 036 A1**
(43) Date of publication of application: **12.08.2026**
(21) Application number: 25796642.4
(22) Date of filing: 13.01.2025
(51) Int. Cl.: C04B 20/06, H01M 8/0282, H01M 8/1246

(54) **SOFC HIGH-TEMPERATURE VERMICULITE SEALING MATERIAL AND PREPARATION METHOD THEREFOR**

(30) Priority: 26.12.2024 CN 202411933486
(71) Applicant: Zhejiang CPS Cathay Packing & Sealing Co., Ltd., Hangzhou, Zhejiang 311200 (CN)
(72) Inventor: REN, Xianzhi, Hangzhou, Zhejiang 311200 (CN); SUN, Lijie, Hangzhou, Zhejiang 311200 (CN); YU, Jiangfan, Hangzhou, Zhejiang 311200 (CN); SUN, Lichao, Hangzhou, Zhejiang 311200 (CN)
(74) Representative: Elzaburu S.L.P.
(86) International application number: PCT/CN2025/072009
(87) International publication number: WO 2026/137536

(57) **Abstract**

The present invention relates to the technical field of sealing materials, and discloses a high-temperature vermiculite sealing material for SOFC, and a preparation method thereof. The material is prepared from modified chemically expanded vermiculite and negative-ion high-temperature expanded vermiculite. The modified chemically expanded vermiculite carries positive charges, and the negative-ion high-temperature expanded vermiculite carries negative charges. After the modified chemically expanded vermiculite and the negative-ion high-temperature expanded vermiculite are mixed, electrostatic attraction is generated to achieve combination. The material does not use binders, so that the loss on ignition is significantly reduced without changing the combined strength of the sealing material. The stearate serves as an intercalation agent of chemically expanded vermiculite. The modified chemically expanded vermiculite prepared from the stearate has high-temperature resistant compressive strength at 700°C. The negative-ion high-temperature expanded vermiculite is formed by using negative ion air to treat high-temperature expanded vermiculite to enable the high-temperature expanded vermiculite to load and accumulate negative charges. Using the negative ion air to treat the high-temperature expanded vermiculite does not require the use of chemical agents, the process is simple, and large-scale production can be achieved.

## Description

### TECHNICAL FIELD

The present invention relates to the technical field of sealing materials, in particular, to a high-temperature vermiculite sealing material for SOFC, and a preparation method thereof.

### BACKGROUND

A solid oxide fuel cell (SOFC) is an energy conversion device that directly converts chemical energy of fuel into electric energy, which is not limited by the Carnot cycle, has high energy conversion efficiency, and has the advantages of wide fuel adaptability, cleanliness, no pollution, all solid-state structure, no use of noble metal catalysts, and the like. A stack is a core component of the SOFC, and is sealed with a stack sealing material. At present, stack sealing materials in the prior art mainly include high-temperature glass glue and high-temperature ceramic glue. The thermal expansion coefficients of glass, metal and battery cells are different. Under working conditions of high temperature, current and airflow disturbance, the stack sealing structure is easily damaged, leading to performance degradation and severe restriction on the number of start-stop cycles of the stack. Therefore, it is necessary to provide a new stack sealing material.

A sealing material disclosed in the patent with publication number CN112424310 B states that a high-temperature vermiculite sealing material has extremely stable characteristics such as high thermal cycle resistance, high temperature resistance and corrosion resistance, and is a sealing material for SOFC with excellent performance. At present, a traditional high-temperature vermiculite sealing material is formed by bonding chemically expanded vermiculite and high-temperature expanded vermiculite through a polymer binder. Because the polymer binder is mainly an organic polymer, it is carbonized at a high temperature. This increases the loss on ignition of the sealing material with the increase of the dosage of the polymer binder at a high temperature. Excessive loss on ignition may lead to the problems that the structure of the sealing material is prone to collapse and the sealing performance is significantly reduced. Therefore, during preparation of the high-temperature vermiculite sealing material, it is necessary to balance the relationship between bonding strength and loss on ignition, thereby ensuring the strength of the sealing material while minimizing the loss on ignition.

### SUMMARY

To overcome the problems of high binder consumption and high loss on ignition in high-temperature vermiculite sealing materials in the prior art, the present invention provides a high-temperature vermiculite sealing material for SOFC, and a preparation method thereof. The material is prepared from modified chemically expanded vermiculite and negative-ion high-temperature expanded vermiculite. The modified chemically expanded vermiculite carries positive charges, and the negative-ion high-temperature expanded vermiculite carries negative charges. After the modified chemically expanded vermiculite and the negative-ion high-temperature expanded vermiculite are mixed, electrostatic attraction is generated to achieve combination. The material does not use binders, so that the loss on ignition is significantly reduced without changing the combined strength of the sealing material.

The specific technical solution of the present invention is as follows:
A high-temperature vermiculite sealing material for SOFC is provided. Raw materials include modified chemically expanded vermiculite and negative-ion high-temperature expanded vermiculite. Raw materials of the modified chemically expanded vermiculite include stearate and chemically expanded vermiculite. The mass ratio of the stearate to the chemically expanded vermiculite is (3-5):1. Raw materials of the negative-ion high-temperature expanded vermiculite include negative ion air and high-temperature expanded vermiculite.

The present invention provides a high-temperature vermiculite sealing material for SOFC. The material is composed of modified chemically expanded vermiculite that carries positive charges and negative-ion high-temperature expanded vermiculite that carries negative charges through electrostatic attraction. Compared with a traditional high-temperature vermiculite sealing material which uses a binder for combination, there is no significant change in combined strength, and the loss on ignition is significantly reduced.

The modified chemically expanded vermiculite of the present invention is formed by using a stearate intercalation agent for intercalation modification of chemically expanded vermiculite. The chemically expanded vermiculite has the characteristic of interlayer charge accumulation, so that a cation exchanger can be used for intercalation modification of the chemically expanded vermiculite. After the accumulation of positive charges, the interlayer spacing of the intercalated modified expanded vermiculite increases. Common cation exchangers mainly include quaternary ammonium salt cation exchangers. In practical use of the present invention, it has been found that a quaternary ammonium salt cation exchanger used in a traditional sealing material has the problem of easy decomposition at a high temperature, which causes rapid failure of the modified chemically expanded vermiculite and the negative-ion high-temperature expanded vermiculite which are combined by electrostatic attraction in a high-temperature environment, resulting in structural collapse of the sealing material. Therefore, in response to the above problem, the present application selects stearate as an intercalation agent of the chemically expanded vermiculite. The modified chemically expanded vermiculite prepared from the stearate has high-temperature resistant compressive strength at 700°C.

The negative-ion high-temperature expanded vermiculite of the present invention is formed by using negative ion air to treat high-temperature expanded vermiculite to enable the high-temperature expanded vermiculite to load and accumulate negative charges. Using the negative ion air to treat the high-temperature expanded vermiculite does not require the use of chemical agents, the process is simple, and large-scale production can be achieved.

Preferably, the mass ratio of the modified chemically expanded vermiculite to the negative-ion high-temperature expanded vermiculite is (2-4):1.

Preferably, the concentration of negative ions in the negative ion air is 10000-15000/cm³.

Preferably, the particle size of the chemically expanded vermiculite is 20-50 meshes.

Preferably, the particle size of the high-temperature expanded vermiculite is 300-325 meshes.

A preparation method of the above high-temperature vermiculite sealing material for SOFC is provided. The preparation method includes the following steps: injecting the stearate and the chemically expanded vermiculite into a ball milling device for ball milling treatment to prepare the modified chemically expanded vermiculite, introducing air into a high-voltage ionization chamber for negative high-voltage ionization treatment to prepare the negative ion air, introducing the negative ion air into a filter element containing the high-temperature expanded vermiculite for filtration treatment to prepare the negative-ion high-temperature expanded vermiculite, and mixing and stirring the modified chemically expanded vermiculite with the negative-ion high-temperature expanded vermiculite uniformly, followed by press forming to prepare the high-temperature vermiculite sealing material for SOFC.

The present invention further provides a preparation method of the above high-temperature vermiculite sealing material for SOFC. In the method, the negative-ion high-temperature vermiculite is prepared from the negative ion air and the high-temperature expanded vermiculite, and the negative ion air is prepared by using a high-voltage electrostatic chamber to ionize air. After high-voltage electrostatic treatment on the air, negative ions are generated, and then, the negative ion air is introduced into a filter element prepared from the high-temperature expanded vermiculite. By means of filtration of the high-temperature expanded vermiculite, the negative ions in the air are loaded onto the high-temperature expanded vermiculite, so that the high-temperature expanded vermiculite accumulates negative charges. Using the method for preparing the negative-ion high-temperature expanded vermiculite does not require the use of chemical agents, the process is simple, and the large-scale production can be achieved.

Preferably, the pressure for press forming is 5-10 MPa, and the time is 1-3 h.

Preferably, the rotation speed for ball milling treatment is 50-80 rmp, and the time is 1-2 h.

Preferably, the voltage for high-voltage ionization treatment is 10000-12000 V.

Preferably, the flow of the negative ion air is 100-200 cm³/min, the time for filtration treatment is 3-5 h, and the mass of the high-temperature expanded vermiculite is 0.8-1 kg.

Compared with the prior art, the present application has the following technical effects:
(1) The material is prepared from the modified chemically expanded vermiculite and the negative-ion high-temperature expanded vermiculite. The modified chemically expanded vermiculite carries positive charges, and the negative-ion high-temperature expanded vermiculite carries negative charges. After the modified chemically expanded vermiculite and the negative-ion high-temperature expanded vermiculite are mixed, electrostatic attraction is generated to achieve combination. The material does not use binders, so that the loss on ignition is significantly reduced without changing the combined strength of the sealing material.
(2) The stearate serves as an intercalation agent of the chemically expanded vermiculite. The modified chemically expanded vermiculite prepared from the stearate has high-temperature resistant compressive strength at 700°C.
(3) The negative-ion high-temperature expanded vermiculite of the present invention is formed by using the negative ion air to treat the high-temperature expanded vermiculite to enable the high-temperature expanded vermiculite to load and accumulate negative charges. Using the negative ion air to treat the high-temperature expanded vermiculite does not require the use of chemical agents, the process is simple, and large-scale production can be achieved.

### DETAILED DESCRIPTION

The present invention is further described below with reference to examples.

### Example 1:

A preparation method of a high-temperature vermiculite sealing material for SOFC includes the following steps:
step 1: 1 L of anhydrous ethanol, 300 g of zinc stearate and 100 g of chemically expanded vermiculite (20-50 meshes) were added to a ball milling device, the ball milling device was heated to 60°C, then ball milling treatment was performed at a rotation speed of 50 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 0.8 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 3 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 2:1, and the mixture was placed in a mold for press forming at a pressure of 5 MPa for 3 h to prepare the high-temperature vermiculite sealing material for SOFC.

### Example 2:

A preparation method of a high-temperature vermiculite sealing material for SOFC includes the following steps:
step 1: 1 L of anhydrous ethanol, 400 g of zinc stearate and 100 g of chemically expanded vermiculite (20-50 meshes) were added to a ball milling device, the ball milling device was heated to 70°C, then ball milling treatment was performed at a rotation speed of 70 rmp for 1-2 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 11000 V was applied to electrodes to ionize air to prepare negative ion air, the concentration of negative ions in the negative ion air was 12000/cm³, the negative ion air was inputted into an air filter through an output pump, a filter element of the air filter was filled with 0.9 kg of high-temperature expanded vermiculite (300-325 meshes), the negative ion air was treated with the air filter to prepare negative-ion high-temperature expanded vermiculite, the flow of the air was 150 cm³/min, the time for filtration treatment was 4 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 3:1, and the mixture was placed in a mold for press forming at a pressure of 8 MPa for 2 h to prepare the high-temperature vermiculite sealing material for SOFC.

### Example 3:

A preparation method of a high-temperature vermiculite sealing material for SOFC includes the following steps:
step 1: 1 L of anhydrous ethanol, 500 g of zinc stearate and 100 g of chemically expanded vermiculite (20-50 meshes) were added to a ball milling device, the ball milling device was heated to 80°C, then ball milling treatment was performed at a rotation speed of 80 rmp for 1-2 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 12000 V was applied to electrodes to ionize air to prepare negative ion air, the concentration of negative ions in the negative ion air was 15000/cm³, the negative ion air was inputted into an air filter through an output pump, a filter element of the air filter was filled with 1 kg of high-temperature expanded vermiculite (300-325 meshes), the negative ion air was treated with the air filter to prepare negative-ion high-temperature expanded vermiculite, the flow of the air was 200 cm³/min, the time for filtration treatment was 5 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 5:1, and the mixture was placed in a mold for press forming at a pressure of 10 MPa for 1 h to prepare the high-temperature vermiculite sealing material for SOFC.

### Example 4:

A preparation method of a high-temperature vermiculite sealing material for SOFC includes the following steps:
step 1: 1 L of anhydrous ethanol, 400 g of zinc stearate and 100 g of chemically expanded vermiculite (20-50 meshes) were added to a ball milling device, the ball milling device was heated to 80°C, then ball milling treatment was performed at a rotation speed of 80 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 1 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 5 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 3:1, and the mixture was placed in a mold for press forming at a pressure of 10 MPa for 1 h to prepare the high-temperature vermiculite sealing material for SOFC.

### Example 5:

A preparation method of a high-temperature vermiculite sealing material for SOFC includes the following steps:
step 1: 1 L of anhydrous ethanol, 400 g of zinc stearate and 100 g of chemically expanded vermiculite (20-50 meshes) were added to a ball milling device, the ball milling device was heated to 80°C, then ball milling treatment was performed at a rotation speed of 80 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 15000/cm³, the negative ion air was inputted into an air filter through an output pump, a filter element of the air filter was filled with 1 kg of high-temperature expanded vermiculite (300-325 meshes), the negative ion air was treated with the air filter to prepare negative-ion high-temperature expanded vermiculite, the flow of the air was 200 cm³/min, the time for filtration treatment was 5 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 3:1, and the mixture was placed in a mold for press forming at a pressure of 10 MPa for 1 h to prepare the high-temperature vermiculite sealing material for SOFC.

### Example 6:

A preparation method of a high-temperature vermiculite sealing material for SOFC includes the following steps:
step 1: 1 L of anhydrous ethanol, 400 g of zinc stearate and 100 g of chemically expanded vermiculite (20-50 meshes) were added to a ball milling device, the ball milling device was heated to 60-80°C, then ball milling treatment was performed at a rotation speed of 50-80 rmp for 1-2 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 12000 V was applied to electrodes to ionize air to prepare negative ion air, the concentration of negative ions in the negative ion air was 15000/cm³, the negative ion air was inputted into an air filter through an output pump, a filter element of the air filter was filled with 1 kg of high-temperature expanded vermiculite (300-325 meshes), the negative ion air was treated with the air filter to prepare negative-ion high-temperature expanded vermiculite, the flow of the air was 200 cm³/min, the time for filtration treatment was 3 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 3:1, and the mixture was placed in a mold for press forming at a pressure of 10 MPa for 1 h to prepare the high-temperature vermiculite sealing material for SOFC.

### Comparative Example 1:

Compared with Example 1, an organic polymer binder is used in Comparative Example 1 to prepare a high-temperature vermiculite sealing material for SOFC. The organic polymer binder is . A preparation method includes the following steps:
step 1: 1 L of anhydrous ethanol, 300 g of zinc stearate and 100 g of chemically expanded vermiculite (20-50 meshes) were added to a ball milling device, the ball milling device was heated to 60°C, then ball milling treatment was performed at a rotation speed of 50 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 0.8 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 3 h, and after treatment, the negative-ion high-temperature expanded vermiculite in the filter element of the air filter was collected; and
step 3: the modified chemically expanded vermiculite, the negative-ion high-temperature expanded vermiculite and a binder were kneaded in vacuum and mixed and stirred at a mass ratio of 2:1:0.05, the mixture was placed in a mold for pre-forming, the billet was dried at 70°C, and the billet was placed on a hot-pressing vulcanizing machine for hot-pressing vulcanization forming to prepare the high-temperature vermiculite sealing material for SOFC.

### Comparative Example 2:

Compared with Example 1, a quaternary ammonium salt cation exchanger is used in Comparative Example 2 to modify chemically expanded vermiculite, where the quaternary ammonium salt cation exchanger is octadecyltrimethylammonium bromide.

A preparation method of a high-temperature vermiculite sealing material for SOFC includes the following steps:
step 1: 1 L of water, 300 g of octadecyltrimethylammonium bromide and 100 g of chemically expanded vermiculite (20-50 meshes) were added to a ball milling device, the ball milling device was heated to 60°C, then ball milling treatment was performed at a rotation speed of 50 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 0.8 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 3 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 2:1, and the mixture was placed in a mold for press forming at a pressure of 5 MPa for 3 h to prepare the high-temperature vermiculite sealing material for SOFC.

### Comparative Example 3:

Compared with Example 1, a quaternary ammonium salt cation exchanger is used in Comparative Example 3 to modify chemically expanded vermiculite, where the quaternary ammonium salt cation exchanger is hexadecyltrimethylammonium bromide.

A preparation method of a high-temperature vermiculite sealing material for SOFC includes the following steps:
step 1: 1 L of water, 300 g of hexadecyltrimethylammonium bromide and 100 g of chemically expanded vermiculite (20-50 meshes) were added to a ball milling device, the ball milling device was heated to 60°C, then ball milling treatment was performed at a rotation speed of 50 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 0.8 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 3 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 2:1, and the mixture was placed in a mold for press forming at a pressure of 5 MPa for 3 h to prepare the high-temperature vermiculite sealing material for SOFC.

### Comparative Example 4:

Compared with Example 1, the stearate in Comparative Example 4 is calcium stearate, includeing the following steps:
step 1: 1 L of anhydrous ethanol, 300 g of calcium stearate and 100 g of chemically expanded vermiculite (20-50 meshes) were added to a ball milling device, the ball milling device was heated to 60°C, then ball milling treatment was performed at a rotation speed of 50 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 0.8 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 3 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 2:1, and the mixture was placed in a mold for press forming at a pressure of 5 MPa for 3 h to prepare the high-temperature vermiculite sealing material for SOFC.

### Comparative Example 5:

Compared with Example 1, the stearate in Comparative Example 5 is barium stearate, including the following steps:
step 1: 1 L of anhydrous ethanol, 300 g of barium stearate and 100 g of chemically expanded vermiculite (20-50 meshes) were added to a ball milling device, the ball milling device was heated to 60°C, then ball milling treatment was performed at a rotation speed of 50 rmp for 1 h to prepare a wet material, and after the wet material was cooled, the wet material was washed with deionized water and dried in an oven at 80°C to prepare modified chemically expanded vermiculite;
step 2: air was introduced into a high-voltage electrostatic chamber, a voltage of 10000 V was applied to electrodes to ionize air to prepare negative ion air, the concentration of negative ions in the negative ion air was 10000/cm³, the negative ion air was inputted into an air filter through an output pump, a filter element of the air filter was filled with 0.8 kg of high-temperature expanded vermiculite (300-325 meshes), the negative ion air was treated with the air filter to prepare negative-ion high-temperature expanded vermiculite, the flow of the air was 100 cm³/min, the time for filtration treatment was 3 h, and after treatment, the negative-ion high-temperature expanded vermiculite in the filter element of the air filter was collected; and
step 3: the modified chemically expanded vermiculite and the negative-ion high-temperature expanded vermiculite were mixed and stirred at a mass ratio of 2:1, and the mixture was placed in a mold for press forming at a pressure of 5 MPa for 3 h to prepare the high-temperature vermiculite sealing material for SOFC.

### Comparative Example 6:

Compared with Example 1, the mass ratio of the zinc stearate to the chemically expanded vermiculite in Comparative Example 6 was 0.5:1, and the other conditions were the same as those in Example 1.

### Comparative Example 7:

Compared with Example 1, the mass ratio of the zinc stearate to the chemically expanded vermiculite in Comparative Example 7 was 10:1, and the other conditions were the same as those in Example 1.

### Test example:

The loss on ignition, tensile strength, density and high-temperature resistant compressive strength of the high-temperature vermiculite sealing material for SOFC prepared in Example 1 to Example 6 and Comparative Example 1 to Comparative Example 7 were tested.

The loss on ignition was tested according to the method specified in GB/T 27970-2011 "Test method for weight loss of non-metallic gasket materials upon exposure to elevated temperatures", the temperature was 800°C, and the time was 4 h;
the tensile strength was tested according to the method specified in GB/T20671.7-2006 "Classification system and test methods for nonmetallic gasket materials"; and
the high-temperature resistant compressive strength of the high-temperature vermiculite sealing material for SOFC was tested by a high-temperature compression testing machine, the temperature at which the high-temperature vermiculite sealing material for SOFC fails was tested, and test results were shown in Table 1.

**Table 1 Test result**

| | Density (g/cm³) | Loss on ignition (%) | Tensile strength (Mpa) | High-temperature resistant compressive strength (°C) |
|---|---|---|---|---|
| Example 1 | 1.03 | 4.82 | 0.49 | 700 |
| Example 2 | 1.08 | 4.74 | 0.48 | 700 |
| Example 3 | 1.05 | 4.85 | 0.49 | 700 |
| Example 4 | 1.02 | 4.83 | 0.48 | 700 |
| Example 5 | 1.04 | 4.82 | 0.49 | 700 |
| Example 6 | 1.02 | 4.82 | 0.48 | 700 |
| Comparative Example 1 | 1.03 | 6.82 | / | 350 |
| Comparative Example 2 | / | / | / | 250 |
| Comparative Example 3 | / | / | / | 180 |
| Comparative Example 4 | / | / | / | 400 |
| Comparative Example 5 | / | / | / | 300 |
| Comparative Example 6 | / | / | 0.23 | / |
| Comparative Example 7 | / | / | 0.49 | / |

As shown in Table 1, the thermal weight loss of the high-temperature vermiculite sealing material for SOFC prepared in Example 1 to Example 6 is less than 5%, the tensile strength is less than 0.5 MPa, the density is 1.0±1 g/cm³, and the high-temperature resistant compressive strength can reach 700°C. The above result shows that the high-temperature vermiculite sealing material for SOFC prepared according to the present invention has low loss on ignition, excellent high temperature resistance, and excellent sealing performance.

In Comparative Example 1, a high-temperature vermiculite sealing material for SOFC is prepared by combination with a binder. The loss on ignition of Comparative Example 1 is 6.82%, and the high-temperature resistant compressive strength is 350°C. Compared with Example 1, the loss on ignition of Comparative Example 1 is significantly higher than that of Example 1, and the high-temperature resistant compressive strength of Comparative Example 1 is significantly lower than that of Example 1. The above result shows that compared with a binder composite material, the loss on ignition of the high-temperature vermiculite sealing material for SOFC prepared according to the present invention is significantly reduced, and the high-temperature resistant compressive strength is significantly increased. Because the binder is usually an organic polymer, the high temperature resistance of the binder is relatively low. In a high-temperature environment, the binder component may soften or even decompose, leading to problems such as leakage of the sealing material. The high-temperature vermiculite material of the present application uses electrostatic attraction and thus has higher stability in the high-temperature environment.

Comparative Example 2 and Comparative Example 3 respectively use quaternary ammonium salt cation exchangers, namely octadecyltrimethylammonium bromide and hexadecyltrimethylammonium bromide to treat chemically expanded graphite. The result shows that the high-temperature resistant compressive strength of Comparative Example 2 is 250°C, the high-temperature resistant compressive strength of Comparative Example 3 is 180°C, and the high-temperature resistant compressive strength of Comparative Example 2 and the high-temperature resistant compressive strength of Comparative Example 3 are significantly lower than that of Example 1. After analysis, it is found that the quaternary ammonium salt cation exchanger intercalated into vermiculite will decompose at a high temperature, which leads to the rapid failure of the electrostatic attraction of vermiculite in the high-temperature vermiculite sealing material for SOFC in the high-temperature environment due to the decomposition of the quaternary ammonium salt cation exchanger, resulting in material collapse.

Comparative Example 4 and Comparative Example 5 respectively use calcium stearate and barium stearate to treat chemical expanded graphite. The result shows that the high-temperature resistant compressive strength of Comparative Example 4 is 400°C, the high-temperature resistant compressive strength of Comparative Example 5 is 300°C, and the high-temperature resistant compressive strength of Comparative Example 4 and the high-temperature resistant compressive strength of Comparative Example 5 are significantly lower than that of Example 1. After analysis, it is found that the calcium stearate and the barium stearate also undergo thermal decomposition at a high temperature. However, because the temperature generated by a stack may exceed 500°C, to ensure that the high temperature resistance of the sealing material can meet the use requirement of the stack, the stack needs to be further optimized. From the above content, it can be seen that when a cation exchanger is used to modify the chemically expanded vermiculite, it is necessary to select a material which is not easy to decompose at a high temperature, so as to ensure that the electrostatic attraction of the high-temperature vermiculite sealing material for SOFC cannot fail due to the decomposition of the cation exchanger. Therefore, the type of the cation exchanger can be adjusted and selected according to practical application needs.

Comparative Example 6 and Comparative Example 7 respectively investigate the dosage of zinc stearate and chemically expanded vermiculite. The result shows that when the dosage is too small, the amount of positive charges of modified chemically expanded vermiculite is insufficient, and the tensile strength of the high-temperature vermiculite sealing material for SOFC is reduced; and when the dosage is too large, due to the saturation of an intercalation effect of an intercalation agent, when a certain amount is reached, the intercalation agent cannot be inserted into the interlayer of vermiculite, resulting in the situation that excessive use of zinc stearate cannot improve the performance of the material.

The above descriptions are only preferred examples of the present invention and do not limit the present invention in any way. Any simple modifications, changes, or equivalent transformations made to the above examples based on the technical essence of the present invention still fall within the scope of protection of the technical solution of the present invention.

## Claims

1. A high-temperature vermiculite sealing material for SOFC, wherein raw materials comprise modified chemically expanded vermiculite and negative-ion high-temperature expanded vermiculite, raw materials of the modified chemically expanded vermiculite comprise stearate and chemically expanded vermiculite, with a mass ratio of zinc stearate to chemically expanded vermiculite of (3-5):1, and raw materials of the negative-ion high-temperature expanded vermiculite comprise negative ion air and high-temperature expanded vermiculite.

2. The high-temperature vermiculite sealing material for SOFC according to claim 1, wherein the mass ratio of the modified chemically expanded vermiculite to the negative-ion high-temperature expanded vermiculite is (2-4):1.

3. The high-temperature vermiculite sealing material for SOFC according to claim 1, wherein the concentration of negative ions in the negative ion air is 10000-15000/cm³.

4. The high-temperature vermiculite sealing material for SOFC according to claim 1, wherein the particle size of the chemically expanded vermiculite is 20-50 meshes.

5. The high-temperature vermiculite sealing material for SOFC according to claim 1, wherein the particle size of the high-temperature expanded vermiculite is 300-325 meshes.

6. A preparation method of the high-temperature vermiculite sealing material for SOFC according to claims 1 to 5, comprising the following steps: injecting the stearate and the chemically expanded vermiculite into a ball milling device for ball milling treatment to prepare the modified chemically expanded vermiculite, introducing air into a high-voltage ionization chamber for high-voltage ionization treatment to prepare the negative ion air, introducing the negative ion air into a filter element containing the high-temperature expanded vermiculite for filtration treatment to prepare the negative-ion high-temperature expanded vermiculite, and mixing and stirring the modified chemically expanded vermiculite with the negative-ion high-temperature expanded vermiculite uniformly, followed by press forming to prepare the high-temperature vermiculite sealing material for SOFC.

7. The preparation method according to claim 6, wherein the pressure for the press forming is 5-10 MPa.

8. The preparation method according to claim 6 or 7, wherein the time for the press forming is 1-3 h.

9. The preparation method according to claim 6, wherein the rotation speed for the ball milling treatment is 50-80 rmp, and the time is 1-2 h.

10. The preparation method according to claim 6, wherein the voltage for the high-voltage ionization treatment is 10000-12000 V, the flow of the negative ion air is 100-200 cm³/min, the time for the filtration treatment is 3-5 h, and the mass of the high-temperature expanded vermiculite is 0.8-1 kg.
